# EUROPÄISCHE PATENTANMELDUNG

(11) **EP 1 159 900 A2**
(43) Veröffentlichungstag der Anmeldung: **05.12.2001**
(21) Anmeldenummer: 01112457.5
(22) Anmeldetag: 22.05.2001
(51) Int. Cl.: A47G 1/06, A47G 1/10, A47G 1/16, A47G 1/24

(54) **Halter für flächige Objekte**

(30) Priorität: 26.05.2000 DE 20009474 U
(71) Anmelder: Steffens, Hubert, 40476 Düsseldorf (DE); Troppenz, Jörg, 51688 Wipperfürth (DE)
(72) Erfinder: Steffens, Hubert, 40476 Düsseldorf (DE); Troppenz, Jörg, 51688 Wipperfürth (DE)
(74) Vertreter: Nunnenkamp, Jörg, Dr.

(57) **Zusammenfassung**

Gegenstand der Erfindung ist ein Halter für Bilder, Fotografien, Flachbildschirme, Lautsprecherfolien oder dergleichen flächige Objekte (O). Dieser verfügt in seinem grundsätzlichen Aufbau über wenigstens eine Frontplatte (1) und eine Rückenplatte (2), welche ein oder mehrere Objekte (O) zwischen sich aufnehmen. Ferner sind zumindest zwei Plattenhalter (3) verwirklicht, welche die Frontplatte (1) und die Rückenplatte (2) mit dem (den) dazwischen befindlichen Objekt(en) (O) zueinander fixieren und hierzu lösbar miteinander verspannt sind. Schließlich dienen zumindest zwei randseitig der Platten (1, 2) geführte längserstreckte Befestigungsmittel (5) zur Wand- und/oder Deckenmontage, wobei die Befestigungsmittel (5) mit wenigstens einem Plattenhalter (3) verbunden sind. Erfindungsgemäß besitzt der Plattenhalter (3) zur lösbaren Verbindung und höhenveränderlichen Anbringung an dem Befestigungsmittel (3) eine Ausnehmung (14) für eine an dem Befestigungsmittel (5) positionsveränderlich verankerte Befestigungshülse (15) und/oder Führungshülse (16).

## Beschreibung

Die Erfindung betrifft einen Halter für Bilder, Fotografien, Flachbildschirme, Lautsprecherplatten oder dergleichen zumeist flächige Objekte, mit wenigstens einer Platte zur Aufnahme des jeweiligen Objektes, ferner mit zumindest zwei Plattenhaltern für die Platte und mit zumindest zwei randseitig der Platten geführten längserstreckten Befestigungsmitteln zur Wand- und/oder Decken- und/oder Bodenmontage, wobei die Befestigungsmittel mit wenigstens einem Plattenhalter verbunden sind und auf diese Weise die Festlegung des gesamten Halters an der Wand bzw. Decke oder am Boden sicherstellen. Grundsätzlich kann der Halter auch zur Festlegung dreidimensionaler Objekte dienen. Ebenso mag es sich bei den flächigen Objekten um auf eine Platte (von hinten) aufgebrachte Bemalungen, Ätzungen, Gravuren etc. handeln.

Üblicherweise ist unter einem flächigen Objekt im Rahmen der vorliegenden Erfindung ein zumeist zweidimensional ausgedehnter Körper zu verstehen, dessen dritte Dimension kaum oder nur unwesentlich ins Gewicht fällt. Neben den zuvor bereits angesprochenen Gegenständen mögen hierzu auch bedruckte Kunststofffolien, lackierte Schaumstoffplatten, Malereien (hinter Glas), Stoffe usw. gehören.

Beim Stand der Technik, von dem die Erfindung ausgeht, sind zwei Platten in Gestalt einer Frontplatte und einer Rückenplatte realisiert, die von die jeweiligen Bildecken umfassenden Formstücken formschlüssig gehalten werden. Dabei ist ein um das Bild geführtes Seil in zu den Längskanten des Bildes parallelen Führungen der Formstücke aufgenommen. Hierdurch lässt sich der bekannte Halter zwar an zwei Befestigungspunkten festlegen, erfordert jedoch für jeden Ausrichtvorgang komplizierte Montagearbeiten. D.h., um beispielsweise die Höhe des bekannten Wechselrahmens verändern zu können, muss praktisch die gesamte Anordnung zerlegt und an den neuen Einsatzzweck angepasst werden (vgl. DE 41 26 173 A1).

Daneben kennt man einen Bilderrahmen, welcher mit an wenigstens vier Ecken das Bild sowie ggf. Vorderglas und Rückplatte übergreifenden Eckteilen ausgerüstet ist. Bei den Eckteilen handelt es sich um im Wesentlichen taschenförmige Dreieck-Eckteile, welche die Ecken des Bildes übergreifen und rückwärtig über eine Spannverbindung miteinander verbunden sind. Diese Vorgehensweise ist relativ aufwendig, zumal die Befestigung des bekannten Bilderrahmens an Wand und/oder Decke gleichsam konventionell erfolgt (vgl. DE 40 12 156 A1).

Der Erfindung liegt das technische Problem zugrunde, einen derartigen Halter so weiter zu bilden, dass eine problemlose Anpassung an unterschiedliche Höhen gelingt und im Übrigen das optische Erscheinungsbild einer solchermaßen ausgerüsteten Wand/Decke einfach verändert werden kann.

Zur Lösung dieser Aufgabe schlägt die Erfindung bei einem gattungsgemäßen Halter vor, dass der Plattenhalter zur lösbaren Verbindung und höhenveränderlichen Anbringung an dem Befestigungsmittel wenigstens eine Ausnehmung für zumindest eine an dem Befestigungsmittel positionsveränderlich verankerte Befestigungshülse und/oder Führungshülse aufweist. Selbstverständlich können auch zwei oder mehr Ausnehmungen sowie zugehörige Hülsen realisiert werden.

Vorzugsweise sind wenigstens zwei Platten in Gestalt einer Frontplatte und einer Rückenplatte verwirklicht, die zwischen sich das eine oder die mehreren (flächigen) Objekte aufnehmen. In diesem Fall fixieren die wenigstens zwei Plattenhalter die Frontplatte und die Rückenplatte mit dem (den) dazwischen befindlichen Objekt(en) zueinander und sind hierzu lösbar miteinander verspannt.

Bei dem Befestigungsmittel handelt es sich vorzugsweise um ein Befestigungsseil, welches grundsätzlich als (mit durchsichtigem oder farbigem Kunststoff überzogenes) Stahlseil ausgeführt sein mag. Fraglos können natürlich auch Befestigungsstangen zum Einsatz kommen. Daneben liegen Befestigungsdrähte bzw. langgestreckte Befestigungsstäbe im Rahmen der Erfindung.

In der Regel sind die beiden Befestigungsmittel mit dem in Gravitationsrichtung unteren Plattenhalter verbunden, während der darüber befindliche obere Plattenhalter für die Führung der Befestigungsmittel sorgt. Das Gewicht des gesamten Halters wird also zumeist von dem unteren Plattenhalter aufgenommen. Dieser steht im einfachsten Fall auf den Befestigungshülsen auf, die ihrerseits an den Befestigungsmitteln positionsveränderlich verankert sind. Das bietet sich z.B. für den Fall an, dass die Befestigungsmittel bzw. Befestigungsseile mit im Wesentlichen gleichen und an die Größe des Bilderhalters angepasstem Abstand entweder senkrecht an einer Wand oder zwischen Decke und Boden geführt werden. Hierdurch kann der Halter bzw. Bilderhalter gleichsam auf beide Befestigungshülsen an den jeweiligen Befestigungsseilen aufgelegt werden, während der obere Plattenhalter einzig für die Führung der Befestigungsseile und letztlich die ebenengleiche Halterung des Bilderhalters mit der durch die beiden Befestigungsseile aufgespannten Halteebene sorgt. Hierzu mögen zusätzliche Führungshülsen an den Befestigungsseilen dienen, die mit dem oberen und/oder unteren Plattenhalter zusammenwirken, aber nicht zwingend sind.

Die Verspannung der Plattenhalter wird vorzugsweise mit Hilfe eines sie verbindenden Spannseiles bewerkstelligt, welches die Plattenhalter gegeneinander lösbar verspannt. Zusätzlich kann in diesem Zusammenhang wenigstens eine, die Enden des Spannseiles aufnehmende längenvariable Verbindungseinrichtung vorgesehen werden. Bei dieser Verbindungseinrichtung handelt es sich insbesondere um ein Spannschloss, eine Schraubhülse, eine Spannklemme, eine Feder oder dergleichen mehr.

In jedem Fall werden die beiden zu verbindenden Enden des Spannseiles lösbar in der Verbindungseinrichtung aufgenommen, so dass diese letztlich die während des Spannens aufgebrachte Spannkraft definiert. Die Funktionsweise der Aufnahmen der Verbindungseinrichtung für die Enden des Spannseiles ist dabei vorzugsweise die gleiche wie die der Befestigungshülsen und/oder Führungshülsen. D.h., dass die Aufnahmen mit unter Federvorspannung stehenden Einsätzen ausgerüstet sind, die im Inneren der Aufnahme befindliche Klemmbacken beaufschlagen. Bei diesen Klemmbacken mag es sich bevorzugt um Klemmkugeln handeln.

Jedenfalls wird zum Einführen des Spannseiles der jeweilige Einsatz in die Aufnahme gedrückt, so dass die Klemmbacke bzw. die Klemmkugeln das Spannseil zwischen sich aufnehmen. Sobald der Einsatz federunterstützt in seine Ausgangslage zurückkehrt, legen sich die Klemmbacken an das Spannseil und halten es fest. - Grundsätzlich können natürlich auch völlig andere Spannvorrichtungen, beispielsweise Verschraubungen, zum Einsatz kommen, solange nur gewährleistet ist, dass hierdurch die beiden Plattenhalter mit der Frontplatte und der Rückplatte sowie dem dazwischen befindlichen Objekt eine lösbare Einheit bilden.

Aus optischen Gründen können die Befestigungsseile zwischen den Platten in einer Plattenzwischenebene verlaufen. Sie werden also bewusst in das Erscheinungsbild des erfindungsgemäßen Halters bzw. Bilderhalters mit einbezogen, wenn Frontplatte und Rückenplatte als im Wesentlichen transparente Glas- oder Kunststoffplatten ausgeführt sind. Vergleichbares gilt, wenn die Befestigungsseile mit Abstand von den Platten in gleicher Längs- oder Quererstreckung im Vergleich zu den Platten parallel zu deren jeweiligem Rand verlaufen. Üblicherweise decken sich zugehörige Ränder der Platten, weil die Rückenplatte und die Frontplatte zumeist im Wesentlichen gleich groß ausgeführt sind.

Im Detail handelt es sich bei der Befestigungshülse und der gleich aufgebauten Führungshülse um auf dem Befestigungsmittel jeweils verschiebbare Klemmhülsen. Der Aufbau dieser Klemmhülsen wird im Rahmen der Figurenbeschreibung noch näher erläutert werden. Sie verfügen über einen unter Federspannung stehenden Einsatz, welcher Klemmbacken an das in der Regel mittig hindurchgeführte Befestigungsmittel bzw. Befestigungsseil verankernd drückt. Um nun die Befestigungs- bzw. Führungshülse in ihrer Position am Befestigungsmittel zu verändern, ist es lediglich erforderlich, den federbeaufschlagten Einsatz gegen die Federkraft in die jeweilige Hülse einzudrücken, so dass die Klemmbacken von dem Befestigungsmittel freikommen. Solange der Einsatz unter Spannung gehalten wird, kann die Befestigungshülse bzw. Führungshülse frei auf dem Befestigungsmittel bzw. Befestigungsseil verschoben werden. Erst wenn diese (manuelle) Beaufschlagung wegfällt, legen sich die Klemmbacken (wieder) an das Befestigungsmittel an und verankern die Befestigungshülse bzw. Führungshülse hieran. Folglich kann im Anschluss der erfindungsgemäße Halter an den betreffenden Hülsen (wieder) aufgehängt werden. Selbstverständlich kann die jeweilige Befestigungshülse bzw. Führungshülse auch mit daran festgelegtem Halter positioniert werden. D.h., für die Ausrichtung des Halters gegenüber den Befestigungsmitteln ist es ausdrücklich nicht erforderlich, diesen abzuhängen.

Der Plattenhalter verfügt darüber hinaus über V-förmige Aufnahmen für das hierin geführte und zentrierte Spannseil, wobei die V-Aufnahme mit ihren Öffnungen zum Platten- bzw. Halterrand weisen. Diese V-förmigen Aufnahmen definieren in der Regel in eckseitiger Verlängerung der Frontplatte und Rückenplatte einen Freiraum, welcher die jeweiligen Ecken der Frontplatte und Rückenplatte aufnimmt. Auf diese Weise lassen sich Beschädigungen an dieser Stelle zuverlässig verhindern. Schließlich verfügt der Plattenhalter zumeist über zwei voneinander beabstandete und die Frontplatte sowie Rückenplatte inklusive dazwischen befindlichem Objekt zwischen sich aufnehmende Halteflansche. Diese Halteflansche ragen regelmäßig über die Ränder der Frontplatten und Rückenplatten über. Auf diese Weise sind die jeweiligen Ecken der Frontplatte und Rückenplatte geschützt, weil die V-förmigen Aufnahmen in plattenseitige Anschläge für die Kanten der betreffenden Platten übergehen.

Der lichte Abstand zwischen den Halteflanschen ist an die Stärke der Frontplatte, der Rückenplatte sowie des dazwischen befindlichen Objektes angepasst. Selbstverständlich können Frontplatte und/oder Rückenplatte an dieser Stelle zusätzlich mit Schutzabdeckungen belegt sein, denen dann natürlich der Abstand Rechnung trägt.

Bei den Befestigungsmitteln mag es sich um stromführende Zuleitungen handeln. Das bietet sich beispielsweise für den Fall an, dass zwei Befestigungsmittel zwischen sich eine Beleuchtungsquelle aufnehmen, bei der es sich beispielhaft um eine Weißlicht-LED handelt, wie sie in WO 97/50 132 beschrieben ist. Daneben liegt es im Rahmen der Erfindung, zwischen der Frontplatte und der Rückenplatte eine Lautsprecherplatte oder dergleichen (mit Abstand) aufzunehmen, welche ihre Ansteuerungssignale ebenfalls über die Befestigungsmittel bzw. stromführenden Zuleitungen erhält.

Üblicherweise werden vier als Eckhalter ausgeführte Plattenhalter verwirklicht, wie dies grundsätzlich in der deutschen Offenlegungsschrift DE 40 12 156 A1 beschrieben ist. Dementsprechend können die Eckhalter eine ganz unterschiedliche Gestaltung annehmen, beispielsweise in Aufsicht dreieckig, rechteckig, L-förmig, quadratisch, rund oder sogar sechseckig ausgeführt sein.

Jedenfalls sind diese vier Eckhalter zumeist mit jeweiligen Aufnahmelängsschlitzen ausgerüstet, die die Ecken der übereinander liegenden Platten aufnehmen. Dieser Aufnahmeschlitz stellt sich in der Regel automatisch zwischen den Halteflanschen des Plattenhalters ein. Zusätzlich zu diesem Aufnahmeschlitz kann jeder Eckhalter mit Bogenführungen versehen werden, über welche das Spannseil - die Platten umrahmend - geführt wird. Hierdurch wird gewährleistet, dass die Bogenführungen, das Spannseil, die Aufnahmeschlitze und letztlich die Platten in übereinstimmenden bzw. parallelen oder koplanaren Ebenen zueinander angeordnet sind.

Immer wird im Rahmen der Erfindung ein Bilderhalter zur Verfügung gestellt, der sich mit weiteren Bilderhaltern in optisch ansprechender Gestaltung zu einem Ensemble zusammenfügen lässt. Hierfür sorgt die erfindungsgemäß verfolgte spezielle Befestigung des Bilderhalters an zumindest zwei Befestigungsseilen. Selbstverständlich können auch drei oder mehr Befestigungsseile vorgesehen werden, wenn dies die Größe und/oder das Gewicht des Bilderhalters erfordert. Dabei ist die Montage insofern einfach und schnell möglich, weil hierzu lediglich die Plattenhalter mit Hilfe des sie verbindenden Spannseiles unter Fixierung der Platten gegeneinander verspannt werden müssen. Auch die anschließende Wand- und/oder Deckenmontage gelingt schnell, problemlos und variabel.

Hierfür sorgt die Tatsache, dass der erfindungsgemäße Bilderhalter praktisch nur zwischen den beiden Befestigungsseilen aufgehängt zu werden braucht. Folglich lassen sich ganz unterschiedliche Dimensionierungen des Bilderhalters realisieren. Auch eine wechselnde Bebilderung gelingt schnell und problemlos. Dafür muss lediglich das Spannseil im Bereich der die Enden fixierenden Verbindungseinrichtung geöffnet werden, so dass dann die Plattenhalter freikommen, und die zuvor fixierten Platten voneinander gelöst werden können. Zu diesem Zweck müssen lediglich die Eckhalter von den Platten abgezogen werden, damit sich beispielsweise die Frontplatte frei bewegen lässt.

Durch die größtenteils transparente Gestaltung von Frontplatte und Rückenplatte und die Tatsache, dass die dazwischen aufgenommenen, ein oder mehreren flächigen Objekte zumeist über Klebepunkte an der Rückplatte befestigt werden, wird ein insgesamt lichtdurchlässiges und gleichzeitig funktionales Design erreicht. Das wird noch dadurch unterstützt, dass die Befestigungsseile bewusst in die optische Gestaltung des Bilderhalters mit einbezogen werden. Dies alles gelingt bei unterschiedlichen und wechselnden Abmessungen sowie Stärken der flächigen Objekte, der Frontplatte und der Rückenplatte. Im Idealfall ist es in diesem Zusammenhang nicht erforderlich, die Plattenhalter auszutauschen, was grundsätzlich jedoch auch möglich ist. Hierin sind die wesentlichen Vorteile der Erfindung zu sehen.

Im Folgenden wird die Erfindung anhand einer lediglich ein Ausführungsbeispiel darstellenden Zeichnung näher erläutert. Es zeigen:
- Fig. 1a, 1b und 1c: eine erste Variante des erfindungsgemäßen Bilderhalters mit vier Eckhaltern in Frontansicht (Fig. 1a), in Draufsicht (Fig. 1b) und Seitenansicht (Fig. 1c),
- Fig. 2: einen erfindungsgemäßen Plattenhalter in vergröβerter Detailansicht,
- Fig. 3a, 3b und 3c: drei Varianten der erfindungsgemäßen Verbindungseinrichtung für das Spannseil,
- Fig. 4a bis 4e: fünf Ausgestaltungen der Eckverbinder nach den Fig. 1a bis 1c und
- Fig. 5a und 5b: mehrere Bilderhalter bei Wandmontage, Deckenmontage bzw. Bodenmontage.

In den Figuren ist ein Bilderhalter dargestellt, welcher mit einer transparenten Frontplatte 1 aus Glas und einer ebenfalls transparenten und gleichgroßen Rückenplatte 2, gleichfalls aus Glas, ausgerüstet ist. Selbstverständlich können auch andere Werkstoffe zum Einsatz kommen, wie dies eingangs bereits beschrieben wurde. Ebenso liegt die Realisierung nur einer einzigen Platte 1, 2 bei dem beschriebenen Bilderhalter im Rahmen der Erfindung. Zwischen den beiden Platten 1, 2 können ein oder mehrere flächige Objekte O, im vorliegenden Fall Bilder, aufgenommen werden. Selbstverständlich eignet sich der Bilderhalter auch dazu, dreidimensionale Objekte O darzustellen, wenngleich in der Regel flächige Objekte O hieran fixiert werden.

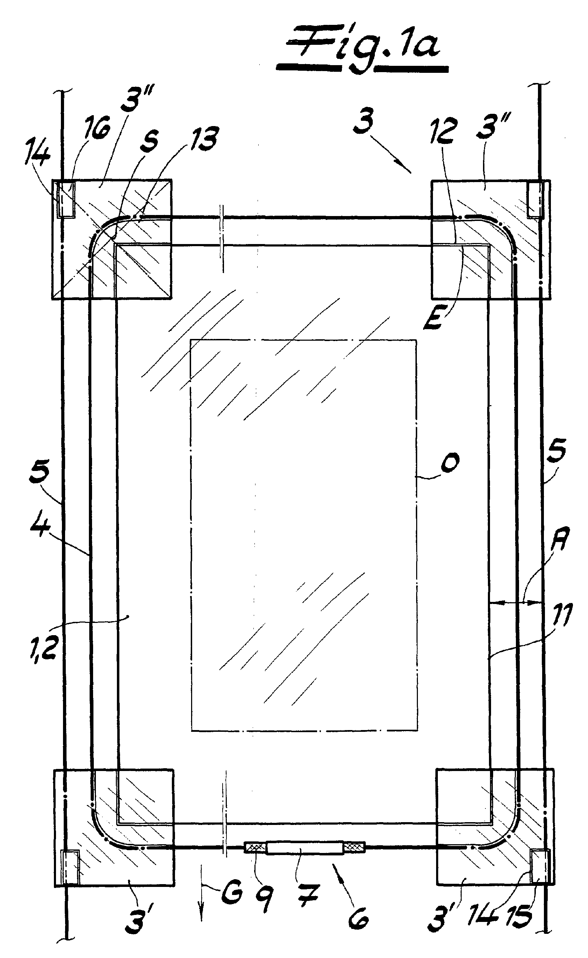

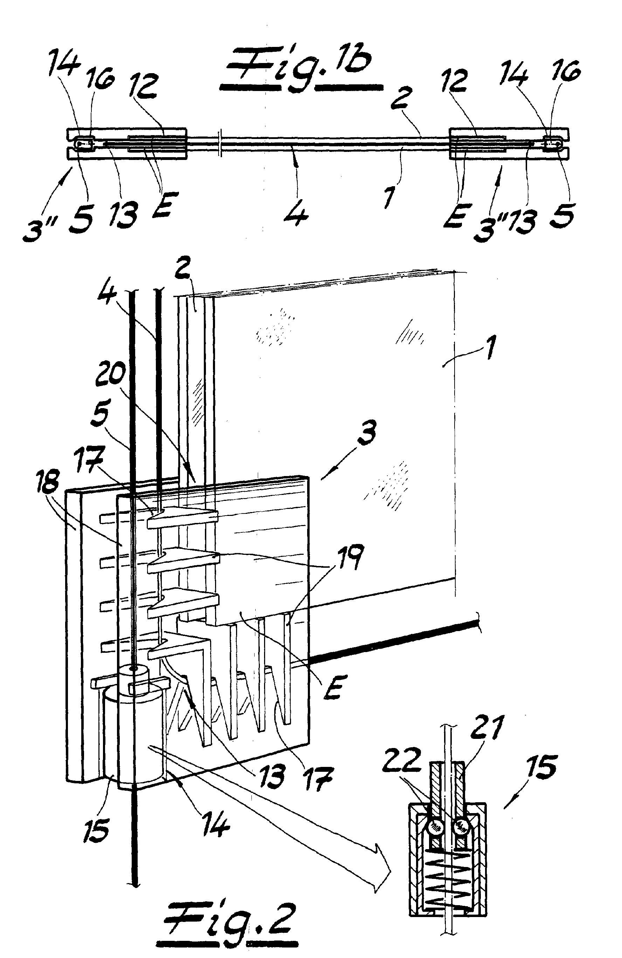

Zusätzlich finden sich im Rahmen des Ausführungsbeispiels nach den Figuren 1a bis 1c vier Plattenhalter 3, wobei Frontplatte 1 und Rückplatte 2 zueinander mit Hilfe der Plattenhalter 3 fixiert werden. Hierzu lassen sich die Plattenhalter 3 lösbar gegeneinander verspannen, und zwar unter Rückgriff auf ein Spannseil 4.

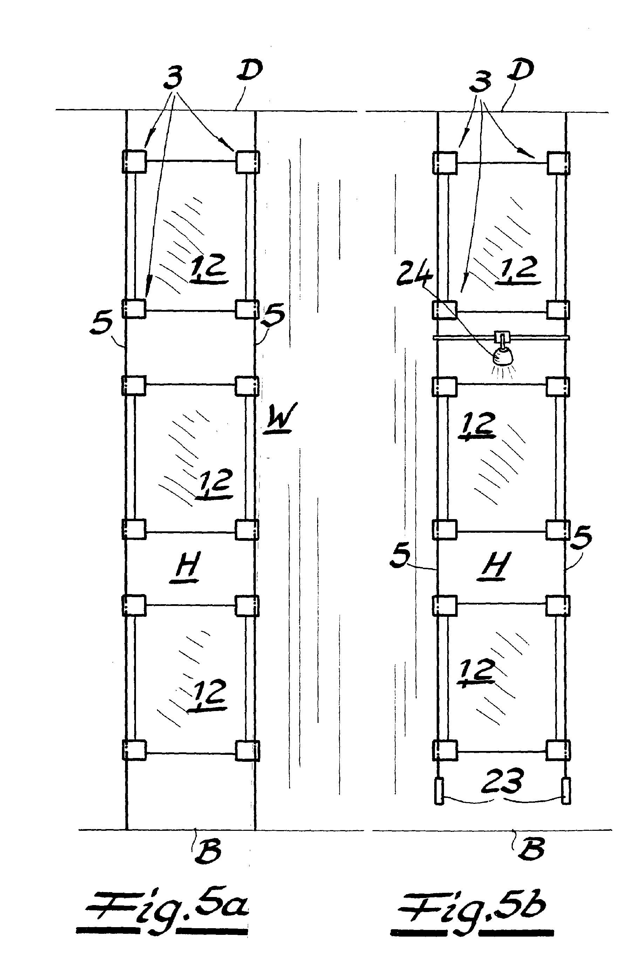

Erfindungsgemäß erfolgt die Wand- und/oder Deckenmontage des dargestellten Bilderhalters über zumindest zwei, mit wenigstens einem Plattenhalter 3 verbundene und randseitig der Platten 1, 2 geführte Befestigungsmittel bzw. Befestigungsseile 5. Bei diesen Befestigungsseilen 5 handelt es sich im Rahmen des Ausführungsbeispiels um Stahlseile mit transparenter Kunststoffbeschichtung. Die Befestigungsseile 5 spannen ausweislich der Figuren 5a, 5b eine Halteebene H für die jeweiligen Bilderhalter auf.

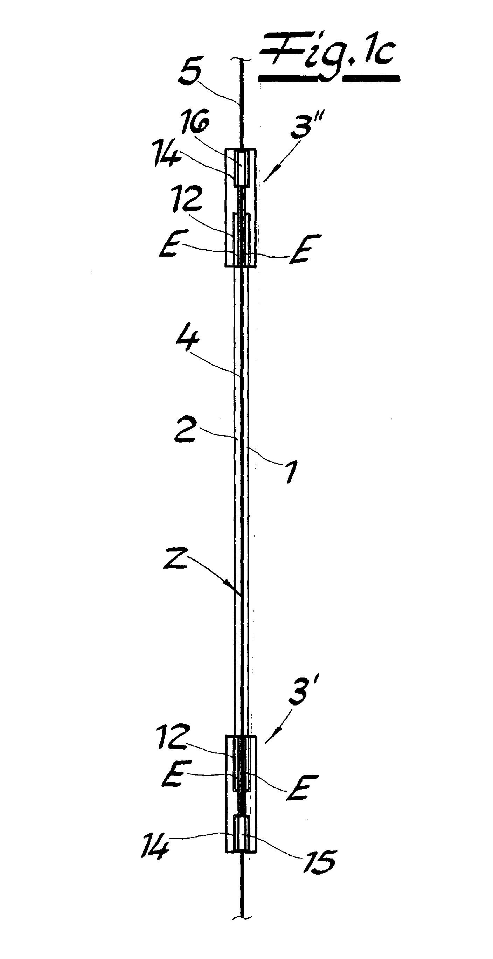

Deren Festlegung an den Befestigungsseilen 5 geschieht wie folgt. Zunächst einmal sind im Rahmen des Ausführungsbeispiels nach den Figuren 1a, 1b und 1c die dortigen Befestigungsseile 5 mit dem in Gravitationsrichtung G jeweils unteren Plattenhalter 3' verbunden. Der jeweils darüber befindliche obere Plattenhalter 3" sorgt demgegenüber für die Führung der Befestigungsseile 5.

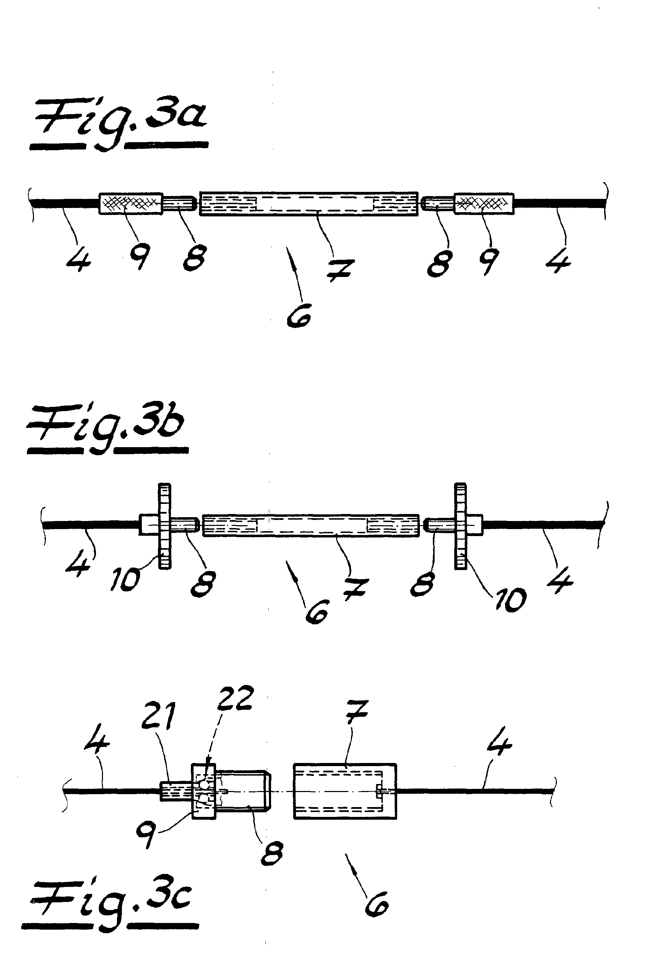

Um die Plattenhalter 3 mit Hilfe des Spannseiles 4 gegeneinander lösbar zu verspannen ist wenigstens eine, die Enden des Spannseiles 4 aufnehmende, längenveränderliche Verbindungseinrichtung 6 vorgesehen, die im Detail Gegenstand der Figuren 3a, 3b und 3c ist. Anhand der Darstellung in den Figuren 3a, 3b, 3c erkennt man, dass es sich bei der Verbindungseinrichtung 6 im Rahmen des Ausführungsbeispiels um ein Spannschloss bzw. zwei Schraubhülsen handelt.

Das Spannschloss (Fig. 3a, 3b) umfasst im Rahmen der dargestellten Ausführungsform eine Gewindehülse 7, in welche endseitig des Spannseiles 4 angebrachte Gewindestifte 9 mit Gewindegängen 8 eingreifen. Folglich resultieren Drehungen der Gewindehülse 7 um seine Längsachse in einer Verspannung oder Lockerung des Spannseiles 4. Im Rahmen der Ausgestaltung nach Fig. 3b sind die Gewindestifte 9 als Rändelschrauben 10 ausgeführt.

Die beiden Schraubhülsen nach Fig. 3c sind einerseits mit einem Gewindestift 9, andererseits einer zugehörigen Gewindehülse 7 ausgerüstet. Für die Befestigung des Spannseiles 4 sorgen Einsätze 21 mit Klemmbacken bzw. Klemmkugeln 22, deren Funktion derjenigen bei den Hülsen 15, 16 entspricht, so dass auf die nachfolgenden Ausführungen verwiesen wird.

Anstelle des in den Figuren 3a, 3b, 3c dargestellten Spannschlosses bzw. der beiden Schraubhülsen kann natürlich auch jedwede andere längenveränderliche Verbindungseinrichtung 6 zum Einsatz kommen. Dies gilt beispielsweise für eine Spannklemme oder sogar eine Feder. Immer sorgt die Verbindungseinrichtung 6 dafür, dass nach Anbringung der Plattenhalter 3 und demzufolge Fixierung der Platten 1, 2 das Spannseil 4 die Plattenhalter 3 gegeneinander festlegt.

Die Befestigungsseile 5 lassen sich zwischen den Platten 1, 2 in einer Plattenzwischenebene anordnen, was jedoch nicht dargestellt ist. Daneben zeigen die Fig. 1 bis 1c eine Variante auf, bei welcher die Befestigungsseile 5 mit Abstand A von den Platten 1, 2 in gleicher Längserstreckung wie die Platten 1, 2 bzw. dortige Ränder 11 verlaufen. Im Rahmen des Ausführungsbeispiels sind die Befestigungsseile 5 jeweils parallel mit gleichem Abstand A von den jeweiligen Rändern 11 angeordnet. Das Spannseil 4 verläuft demgegenüber mittig zwischen dem zugehörigen Rand 11 und dem jeweiligen Befestigungsseil 5, und zwar jeweils im Bereich zwischen zwei sich gegenüberliegenden und als Eckhalter 3 bzw. 3', 3'' ausgebildeten Plattenhaltern 3.

Bei dieser Ausführungsform sind - wie gesagt - die Plattenhalter 3 als vier gleich ausgebildete Eckhalter 3 ausgeführt. Diese Plattenhalter bzw. Eckhalter 3 besitzen einen Aufnahmeschlitz 12, in welchen die Ecken E der Platten 1, 2 eintauchen. Das macht die Figur 1a unmittelbar deutlich, weil die Eckhalter 3 aus einem transparenten Kunststoff, vorliegend einem Acrylat, gefertigt sind. Der jeweilige Aufnahmeschlitz 12 ist dabei natürlich an die korrespondierende Ecke E der Platten 1, 2 angepasst. Das gilt auch für seine Breite, die der Stärke der Plattenhalter 1, 2 in Verbindung mit einem dazwischen aufgenommenen flächigen Objekt O Rechnung trägt.

Den vorgenannten Darstellungen lässt sich ferner entnehmen, dass die Eckhalter 3 mit Bogenführungen 13 ausgerüstet sind, über welche das Spannseil 4 geführt wird. Diese Bogenführungen 13 spannen eine Ebene auf, die im Wesentlichen mit der Plattenzwischenebene Z und damit den Plattenebenen zusammenfällt. Folglich erstreckt sich auch das hierüber geführte Spannseil 4 in eben dieser Ebene, die auch die beiden Befestigungsseile 5 aufnimmt. Jedenfalls umrahmt das Spannseil 4 die beiden Platten 1, 2 und sorgt in Verbindung mit der Verbindungseinrichtung 6 dafür, dass die Eckhalter 3 eckseitig jeweils an die beiden zueinander zu fixierenden Platten 1, 2 gedrückt werden, damit zwischen den Platten 1, 2 aufgenommene flächige Objekte O, beispielsweise Bilder, nicht herunterfallen können. Zusätzliche Klebepunkte an der Rückenplatte 2 mögen für eine weitergehende Festlegung beispielsweise eines Bildes sorgen, was jedoch nicht zwingend ist.

Die Figuren 1a bis 1c machen weiter deutlich, dass die dortigen Plattenhalter 3 bzw. Eckhalter 3 mit Ausnehmungen 14 ausgerüstet sind. Diese Ausnehmungen 14 sorgen für die Aufnahme von Befestigungshülsen 15 und Führungshülsen 16, die an den Befestigungsseilen 5 variabel festgelegt werden können. Zu diesem Zweck können die vorgenannten Hülsen 15, 16 mit Gewindeschrauben ausgerüstet sein, die eine höhenvariable Fixierung am zugehörigen Befestigungsseil 5 ermöglichen. Das ist jedoch nicht dargestellt.

Üblicherweise sind die im Bereich der unteren Eckhalter bzw. Plattenhalter 3' in den dortigen Ausnehmungen 14 aufgenommenen Hülsen als Befestigungshülsen 15 ausgeführt, d.h. sie nehmen das gesamte Gewicht des Bilderhalters auf. Dagegen sorgen die in den Ausnehmungen 14 der oberen Eckhalter bzw. Plattenhalter 3'' angeordneten Führungshülsen 16 für die Ausrichtung des Bilderhalters in der Halteebene H.

Die Ausgestaltung der Eckhalter 3 ist dabei so getroffen, dass die beschriebenen Ausnehmungen 14 jeweils eckrandseitig anzutreffen sind, während die jeweiligen Bogenführungen 13 im Bereich eines Mittelpunktes bzw. Schwerpunktes S des jeweiligen Eckhalters 3 angeordnet sind, wobei sich platteninnenseitig der zugehörige Aufnahmeschlitz 12 anschließt. Die Eckhalter 3 sind plattenaußenseitig ebenfalls geschlitzt ausgeführt, damit das Spannseil 4 von außen auf die Bogenführungen 13 aufgelegt werden kann.

Im Rahmen einer besonders bevorzugten Variante nach Fig. 2 wird so vorgegangen, dass die Plattenhalter bzw. Eckhalter 3 jeweils V-förmige Aufnahmen 17 zwischen zwei - parallel zu den beiden Platten 1, 2 verlaufenden - Halteflanschen 18 aufweisen. Die V-förmige Aufnahmen 17 öffnen sich jeweils nach außen, d.h. zum 'Rand der Plattenhalter 3 hin. In diese V-förmigen Aufnahmen 17 lässt sich das Spannseil 4 einlegen und zentrieren. Gleichzeitig stützen sich die Ränder der Platten 1, 2 an Verlängerungen 19 der V-förmigen Aufnahmen 17 ab.

Die Ecken E der beiden Platten 1, 2 werden in diesem Fall jeweils in einem Freiraum 20 aufgenommen, welcher von den V-förmigen Aufnahmen 17 bzw. seinen Verlängerungen 19 definiert wird. In eckseitiger Verlängerung des Eckhalters 3 dieses Freiraumes 20 ist die Ausnehmung 14 für die Befestigungshülse 15 angeordnet.

Bei der Befestigungshülse 15 (und auch der Führungshülse 16) handelt es sich um ein positionsveränderlich an dem Befestigungsmittel bzw. Befestigungsseil 5 verankerbares Bauteil. Zu diesem Zweck verfügt die jeweilige Hülse 15, 16 über einen unter Federvorspannung stehenden Einsatz 21. Dieser Einsatz 21 beaufschlagt im Inneren der jeweiligen Hülse 15, 16 vorhandene und lediglich angedeutete Klemmbacken bzw. Klemmkugeln 22. Wenn der Einsatz 21 in die Hülse 15, 16 eintaucht, kommen die Klemmbacken bzw. Klemmkugeln 22 vom Befestigungsmittel bzw. Befestigungsseil 5 frei. Dagegen sorgt die Feder bei wegfallender Beaufschlagung dafür, dass die Klemmbacken bzw. Klemmkugeln 22 an das Befestigungsseil 5 verankernd angedrückt werden, so dass im Anschluss hieran der dargestellte Halter an den Hülsen 15, 16 aufgehängt werden kann (vgl. den vergrößerten Auszug in Fig. 2).

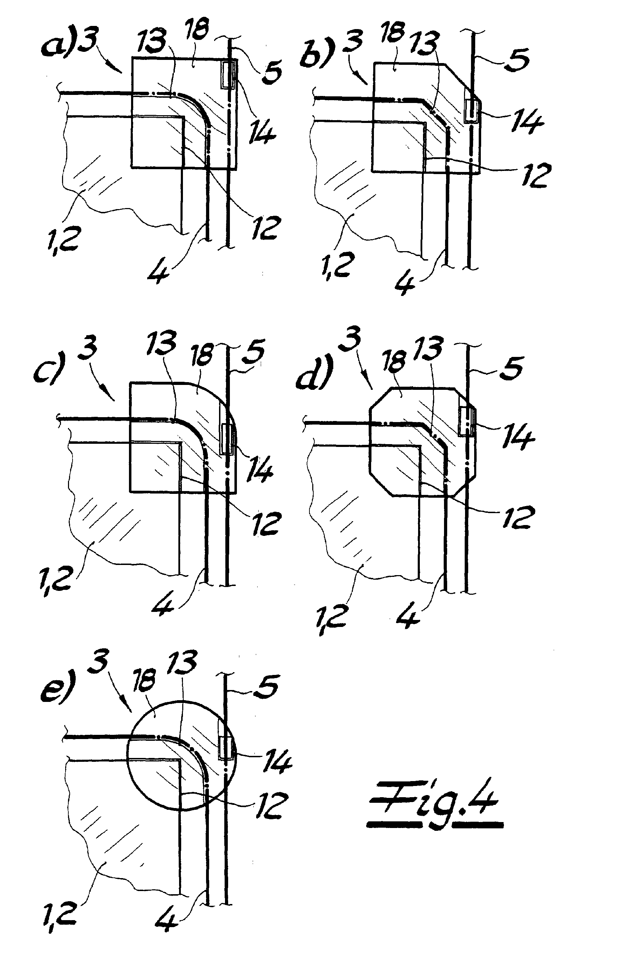

Im Rahmen der Fig. 4a bis 4e werden verschieden gestaltete Plattenhalter bzw. Eckverbinder 3 illustriert. Diese besitzen zwar ein wechselndes äußeres Erscheinungsbild, sind jedoch unverändert mit den tragenden Merkmalen des Aufnahmeschlitzes 12, der Halteflansche 18, der Bogenführung 13 und der Ausnehmung 14 für die Hülsen 15, 16 ausgerüstet.

Die Illustrationen 5a, 5b machen schließlich deutlich, dass sich der beschriebene Bilderhalter Bild an Bild an zwei beispielweise zwischen Boden B und Decke D gespannten Befestigungsseilen 5 jeweils aufhängen lässt (vgl. Fig. 5a). Im Rahmen der Variante nach Fig. 5b wird eine ausschließliche Deckenmontage verfolgt, wobei endseitig der Befestigungsseile 5 vorgesehene Gewichte 23 für die nötige Stabilität im Raum sorgen. Selbstverständlich lassen sich die Befestigungsseile auch vor einer Wand W anbringen. Immer kann eine variierende Bebilderung einfach und problemlos durchgeführt werden. Auch lassen sich ganz unterschiedlich gestaltete und abwechselnd große Bilderhalter an den Befestigungsseilen 5 festlegen. Hierfür sorgt die praktisch hängende Befestigung unter Rückgriff auf die unteren Eckhalter 3' im Zusammenspiel mit den Befestigungshülsen 15. Demgegenüber übernimmt der obere Eckhalter 3'' lediglich eine Führungsfunktion.

Das Befestigungsseil 5 kann auch als stromzuführende Zuleitung eingesetzt werden, wenn eine angedeutete Beleuchtungsquelle 24 mit Strom beaufschlagt werden soll. Das gleiche gilt für den Fall, dass als Objekt O eine oder mehrere Lautsprecherplatten zwischen den Platten 1, 2 gehalten wird bzw. werden und mit Hilfe der Zuleitungen zum Schwingen gebracht werden soll bzw. sollen. Bei einer solchen Lautsprecherplatte handelt es sich im einfachsten Fall um eine Platte mit zugehörigem (elektrodynamisch angetriebenen) Resonanzgeber.

Daneben kann zwischen den beiden Platten 1, 2 selbstverständlich ein (LCD-)Bildschirm aufgenommen werden, welcher zur Ausgabe situationsbezogener Darstellungen oder auch einfach wechselnder Kunstgegenstände dienen mag.

Auch liegt es selbstverständlich im Rahmen der Erfindung, eine (oder beide) der beiden vorgenannten Platten 1, 2 (von hinten) zu bemalen oder mit Fräsungen, Ätzungen oder dergleichen zu versehen, um beispielsweise ein Wegeleitsystem darstellen zu können.

Die Platten- bzw. Eckhalter 3 können aus Polycarbonat oder ABS (Acrylnitril-Butadien-Styrol) gefertigt sein. Auch Metallbeschichtungen (z.B. aus Chrom) sind denkbar. Selbstverständlich ermöglichen die Befestigungs- und Führungshülsen 15, 16 gleichsam als Stopper zur Aufnahme der Eckhalter bzw. Plattenhalter 3 auch eine "schiefe" Anbringung des gesamten Halters an den Befestigungsseilen 5. Das ist jedoch nicht dargestellt.

## Patentansprüche

1. Halter für Bilder, Fotografien, Flachbildschirme, Lautsprecherplatten oder dergleichen zumeist flächige Objekte (O), mit
- wenigstens einer Platte (1, 2) zur Aufnahme des jeweiligen Objektes (O), ferner mit
- zumindest zwei Plattenhaltern (3) für die Platte (1, 2), und mit
- zumindest zwei randseitig der Platte (1, 2) geführten längserstreckten Befestigungsmitteln (5) zur Wand-und/oder Decken- und/oder Bodenmontage,
wobei die Befestigungsmittel (5) mit wenigstens einem Plattenhalter (3) verbunden sind,
**dadurch gekennzeichnet,dass**
der Plattenhalter (3) zur lösbaren Verbindung und höhenveränderlichen Anbringung an dem Befestigungsmittel (3) wenigstens eine Ausnehmung (14) für zumindest eine an dem Befestigungsmittel (5) positionsveränderlich verankerte Befestigungshülse (15) und/oder Führungshülse (16) aufweist.

2. Halter nach Anspruch 1, **dadurch gekennzeichnet, dass** wenigstens zwei Platten (1, 2) in Gestalt einer Frontplatte (1) und einer Rückenplatte (2) verwirklicht sind, die zwischen sich das eine oder die mehreren flächigen Objekte (O) aufnehmen.

3. Halter nach Anspruch 1 oder 2, **dadurch gekennzeichnet, dass** die beiden Plattenhalter (3) die Frontplatte (1) und die Rückenplatte (2) mit dem (den) dazwischen befindlichen Objekt(en) (O) zueinander fixieren und hierzu lösbar miteinander verspannt sind.

4. Halter nach einem der Ansprüche 1 bis 3, **dadurch gekennzeichnet, dass** die Befestigungshülse (15) und/oder Führungshülse (16) als auf dem Befestigungsmittel (5) verschiebbare Klemmhülse (15, 16) ausgebildet ist.

5. Halter nach einem der Ansprüche 1 bis 4, **dadurch gekennzeichnet, dass** die Plattenhalter (3) mit Hilfe mindestens eines sie verbindenden Spannseiles (4) gegeneinander lösbar verspannt sind.

6. Halter nach Anspruch 5, **dadurch gekennzeichnet, dass** zur lösbaren Verspannung des Spannseiles (4) wenigstens eine, die Enden des Spannseiles (4) aufnehmende, längenveränderliche Verbindungseinrichtung (6) vorgesehen ist.

7. Halter nach einem der Ansprüche 1 bis 6, **dadurch gekennzeichnet, dass** der Plattenhalter (3) V-förmige Aufnahmen (17) für das hierin geführte und zentrierte Spannseil (4) aufweist.

8. Halter nach Anspruch 7, **dadurch gekennzeichnet, dass** die V-förmigen Aufnahmen (17) in eckseitiger Verlängerung der Frontplatte (1) und Rückenplatte (2) einen Freiraum (20) definieren.

9. Halter nach einem der Ansprüche 1 bis 8, **dadurch gekennzeichnet, dass** der Plattenhalter (3) zwei voneinander beabstandete und die Frontplatte (1) sowie Rückenplatte (2) inklusive dazwischen befindlichem Objekt (O) zwischen sich aufnehmende Halteflansche (18) aufweist.

10. Halter nach einem der Ansprüche 1 bis 9, **dadurch gekennzeichnet, dass** die Frontplatte (1) und/oder die Rückenplatte (2) als im Wesentlichen gleichgroße, transparente Glas- und/oder Kunststoffplatten ausgeführt sind.
